# EUROPEAN PATENT APPLICATION

(11) **EP 2 434 820 A1**
(43) Date of publication of application: **28.03.2012**
(21) Application number: 09844816.0
(22) Date of filing: 23.10.2009
(51) Int. Cl.: H04W 72/04

(54) **METHOD AND APPARATUS FOR ALLOCATING CONTROL CHANNEL RESOURCES**

(30) Priority: 18.05.2009 CN 200910202901
(71) Applicant: ZTE Corporation, Shenzhen, Guangdong 518057 (CN)
(72) Inventor: TAN, Yuanchun, Shenzhen Guangdong 518057 (CN); PENG, Focai, Shenzhen Guangdong 518057 (CN)
(74) Representative: Waddington, Richard
(86) International application number: PCT/CN2009/074596
(87) International publication number: WO 2010/133064

(57) **Abstract**

The prevent invention discloses a method for allocating control channel element (CCE) resources comprising: a network side receiving a wideband channel quality parameter and a signal received power parameter reported by a user equipment (UE) in a cell; and the network side allocating counted control channel element resources of the cell based on the received wideband channel quality parameter and signal received power parameter. The prevent invention also discloses an apparatus for allocating control channel element (CCE) resources comprising a CCE resources allocator configured to count CCE resources of the cell and allocate the counted CCE resources of the cell based on the received wideband channel quality parameter and signal received power parameter sent by the receiver. The method and apparatus in accordance with the present invention solves the problem of CCE resources allocation, and improves CCE resources utilization and PDCCH decoding success rate.

## Description

### Technical Field

The present invention relates to the field of communication, and more particularly, to a method and apparatus for allocating control channel element resources.

### Background of the Related Art

LTE is a long term evolution technology. The Physical Downlink Control Channel (PDCCH) consists of Control Channel Elements (CCEs) and is used to bear Downlink Control Information (DCI). The CCEs may be divided into public space CCEs and special space CCEs. The public space CCEs are a total of 16 CCEs from the 0^{th} CCE to the 15^{th} CCE, and the rest are special space CCEs. It is stipulated in 3GPP TS36.213.8.7.0 that the CCEs occupied by and allocated to the DCI is determined by the Hash function. The Hash function is related to subframe number, the total number of the CCEs, CCE aggregation level *L*, the number of PDCCH candidates *M*^{(*L*)}, and radio network temporary identity (RNTI) of a user equipment (UE). According to the 3GPP TS36.212.8.5.0, the DCI includes DCI format 0, format 1, format 1A, format 1B, format 1C, format 1D, format 2, format 2A, format 3 and format 3A.

The DCI format 0 (hereinafter short for DCIO) is used for uplink grant of the UE.

The DCI format 1, format 1A, format 1B, format 1C, format 1D, format 2 and format 2A (all called DCIx hereinafter) are used for downlink allocation of the UE.

Only special CCE resources can be allocated for the DCI format 1, format 1B, format 1D, format 2 and format 2A, only public CCE resources can be allocated for the DCI format 1C, format 3 and format 3A, and public CCE resources or special CCE resources can be allocated for the DCI format 0 and format 1A. The MAC layer is required to allocate the CCE resources according to certain methods. However, there is no technology regarding to how to allocate the CCE resources in the prior art. Therefore, there is a need for a solution able to address the problem of how to allocate the CCE resources.

### Content of the Invention

A technical problem to be solved by the present invention is to provide a method and apparatus for allocating control channel element (CCE) resources so as to solve the problem of CCE resources allocation and improve CCE resources utilization and PDCCH decoding success rate.

In order to solve the abovementioned problem, the present invention provides a method for allocating control channel element (CCE) resources comprising:
a network side receiving a wideband channel quality parameter and a signal received power parameter reported by a user equipment (UE) in a cell; and
the network side allocating counted control channel element resources of the cell based on the received wideband channel quality parameter and signal received power parameter.

Furthermore, in the method, the steps of the network side allocating the counted CCE resources of the cell based on the received wideband channel quality parameter and signal received power parameter may further comprise:
the network side counting public space CCE resources of the cell, determining a value of CCE aggregation level L based on the wideband channel quality parameter and the signal received power parameter reported by the UE in the cell, and using the determined value of CCE aggregation level L to allocate the counted public space CCE resources to downlink control information (DCI) of public space CCE resources to be allocated;
the network side counting special space CCE resources of the cell and the rest public space CCE resources of the cell, determining the value of CCE aggregation level L based on the type of DCIx of the UE to be allocated in the cell and the wideband channel quality parameter of the UE, and using the determined value of CCE aggregation level L to allocate the counted CCE resources to downlink of the DCIx of the UE in a descending order of downlink priority of the UE to be allocated in the cell; and
the network side counting the rest special space CCE resources and the rest public space CCE resources of the cell, determining the value of CCE aggregation level L based on the wideband channel quality parameter of the UE to be allocated in the cell, and using the determined value of CCE aggregation level L to allocate the counted CCE resources to uplink grant of the UE in a descending order of uplink priority of the UE to be allocated in the cell.

Furthermore, in the method, the step of the network side determining the value of CCE aggregation level L based on the wideband channel quality parameter and the signal received power parameter reported by the UE in the cell comprises:
when the network side determines that a value of the wideband channel quality parameter reported by the UE activated in the cell is larger than or equals to a first threshold or a value of the signal received power parameter reported by the UE is larger than or equals to a second threshold, the network side determining the value of CCE aggregation level L to be 4; and
when the network side determines that the value of the wideband channel quality parameter reported by the UE activated in the cell is less than the first threshold or the value of the signal received power parameter reported by the UE is less than the second threshold, the network side determining the value of CCE aggregation level L to be 8.

Furthermore, in the method, the CCE resources counted by the network side comprise the number of CCEs and position information corresponding to the CCEs.

After the network side allocates the counted CCE resources of the cell, the method further comprises: the network side mapping the allocated CCE resources to physical downlink control channel (PDCCH) based on the position information corresponding to the CCEs.

Furthermore, in the method, the wideband channel quality parameter reported by the UE is wideband channel quality indicator (CQI); and the signal received power parameter reported by the UE is reference signal received power (RSRP) of the cell to which the UE belongs.

The present invention also provides an apparatus for allocating control channel element (CCE) resources which is located in a network side and comprises a receiver and a control channel element resources allocator, wherein
the receiver is configured to receive a wideband channel quality parameter and a signal received power parameter reported by the UE in the cell, and send the received wideband channel quality parameter and signal received power parameter to the CCE resources allocator; and
the CCE resources allocator is configured to count CCE resources of the cell, and allocate the counted CCE resources of the cell based on the received wideband channel quality parameter and signal received power parameter sent by the receiver.

Furthermore, in the apparatus, the CCE resources allocator comprises a public space CCE allocation processing unit, a downlink CCE resources calculating unit, a CCE allocation processing unit for DCIx and a CCE allocation processing unit for DCIO, wherein
the public space CCE allocation processing unit is configured to count public space CCE resources of the cell, determine a value of CCE aggregation level L based on the received wideband channel quality parameter and signal received power parameter sent by the receiver, use the determined value of CCE aggregation level L to allocate the public space CCE resources to downlink control information (DCI) of the public space CCE resources to be allocated, and send processed data to the downlink CCE resources calculating unit;
the downlink CCE resources allocation unit is configured to count special space CCE resources and the rest public space CCE resources of the cell based on the received processed data sent by the public space CCE allocation processing unit, and send the special space CCE resources and the rest public space CCE resources to the CCE allocation processing unit for DCIx;
the CCE allocation processing unit for DCIx is configured to determine the value of CCE aggregation level L based on the type of DCIx of the UE to be allocated in the cell and the wideband channel quality parameter of the UE, use the determined value of CCE aggregation level L to allocate the received CCE resources sent by the downlink CCE resources calculating unit to downlink of the DCIx of the UE in a descending order of downlink priority of the UE to be allocated in the cell, and sends processed data to the CCE allocation processing unit for DCI0; and
the CCE allocation processing unit for DCIO is configured to count the rest special space CCE resources and the rest public space CCE resources of the cell based on the received processed data sent by the CCE allocation processing unit for DCIx, determine the value of CCE aggregation level L based on the wideband channel quality parameter of the UE to be allocated in the cell, use the determined value of CCE aggregation level L to allocate the counted CCE resources to uplink grant of the UE in a descending order of uplink priority of the UE to be allocated in the cell.

Furthermore, in the apparatus, the public space CCE allocation processing unit determining the value of CCE aggregation level L based on the wideband channel quality parameter and the signal received power parameter sent by the receiver means that:
when the CCE allocation processing unit for DCIx determines that a value of the wideband channel quality parameter reported by the UE activated in the cell is larger than or equals to a first threshold or a value of the signal received power parameter reported by the UE is larger than or equals to a second threshold, the CCE allocation processing unit for DCIx determines the value of CCE aggregation level L to be 4; and
when the CCE allocation processing unit for DCIx determines that the value of the wideband channel quality parameter reported by the UE activated in the cell is less than the first threshold or the value of the signal received power parameter reported by the UE is less than the second threshold, the CCE allocation processing unit for DCIx determines the value of CCE aggregation level L to be 8.

Furthermore, in the apparatus, the CCE resources of the cell counted by the CCE resources allocator comprise the number of CCEs and position information corresponding to the CCEs.

The apparatus further comprises a CCE mapping to physical downlink control channel (PDCCH) processor configured to receive data of the allocated CCE resources of the cell sent by the CCE resources allocator and map the allocated CCE resources to the PDCCH based on the position information corresponding to the CCEs.

Furthermore, in the apparatus, the wideband channel quality parameter reported by the UE is wideband channel quality indicator (CQI); and the signal received power parameter reported by the UE is reference signal received power (RSRP) of the cell to which the UE belongs.

Compared with the prior art, the present invention solves the problem of CCE resources allocation, and improves CCE resources utilization and PDCCH decoding success rate.

### Brief Description of Drawings

FIG. 1 is a flow chart of a method for a network side to allocate CCE resources in accordance with the present invention;
FIG. 2 is a block diagram of an apparatus for allocating control channel element resources in accordance with the present invention.
FIG. 3 is a flow chart of a process for allocating and processing public space CCE resources in accordance with an embodiment of the present invention;
FIG. 4 is a flow chart of a process for calculating downlink CCE resources in accordance with an embodiment of the present invention;
FIG. 5 is a flow chart of a process for allocating and processing CCE resources for DCIx in accordance with an embodiment of the present invention; and
FIG. 6 is a flow chart of a process for allocating and processing CCE resources for DCIO in accordance with an embodiment of the present invention.

### Preferred Embodiments of the Present Invention

The present invention will be further described in conjunction with the accompanying figures and particular embodiments.

The main conception of the present invention is that a network side counts CCE resources of the cell and allocates the counted CCE resources of the cell based on a wideband channel quality parameter and a signal received power parameter reported by a UE in the cell.

The wideband channel quality parameter reported by the UE may be wideband channel quality indicator (CQI); and the signal received power parameter reported by the UE may be reference signal received power (RSRP).

The network side may be an evolved NodeB.

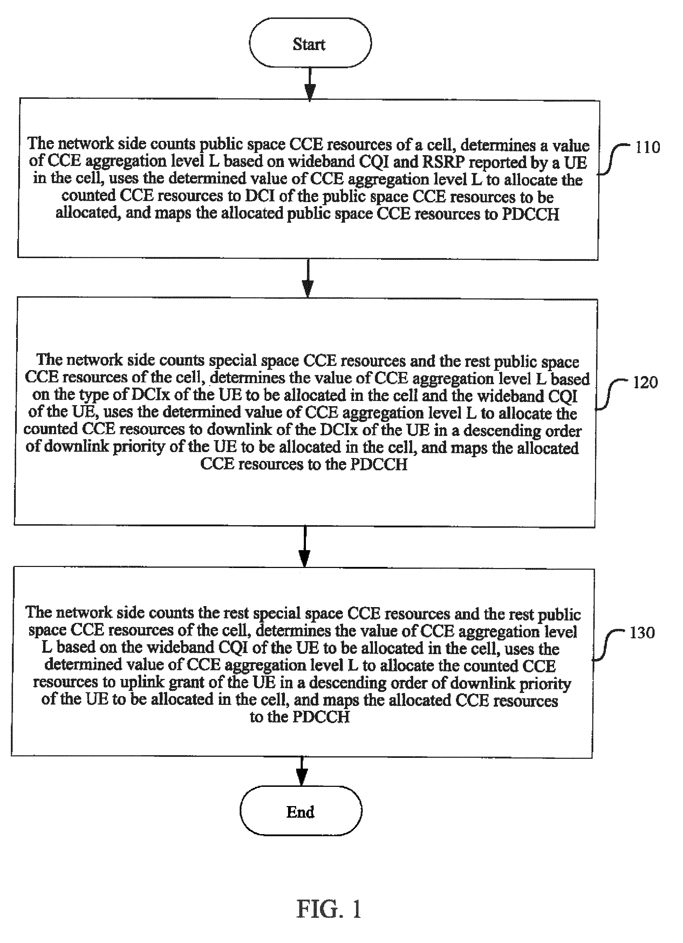

As shown in FIG. 1, the method for the network side to allocate the CCE resources in accordance with the present invention specially comprises the following steps.

Step 110: The network side counts public space CCE resources in a cell, determines a value of CCE aggregation level L based on wideband CQI and RSRP reported by a UE in the cell, uses the determined value of CCE aggregation level L to allocate the counted CCE resources to DCI of the public space CCE resources to be allocated, and maps the allocated public space CCE resources to PDCCH.

The DCI of the public space CCE resources to be allocated is one or more types of DCI of the cell to which the UE belongs used in random access response, broadcast scheduling, paging scheduling, and retransmission grant of DCI3, DCI3A and MSG3. The MSG3 is information containing cell ratio network temporary identifier (C-RNTI) MAC control element (CE) or the common control channel (CCCH) service data unit (SDU) transmitted in uplink-shared channel (UL-SCH), and is a part of random access.

The CCE resources obtained by the network side comprise the number of CCEs and the position information corresponding to the CCEs.

The network side determining the value of CCE aggregation level L based on the wideband CQI and the RSRP reported by the UE in the cell comprises determining the value of CCE aggregation level L to be 4 when a value of the wideband CQI reported by the UE activated in the cell is larger than or equals to a first threshold *a* or a value of the RSRP reported by the UE is larger than or equals to a second threshold b, and determining the value of CCE aggregation level L to be 8 when the value of the wideband CQI reported by the UE activated in the cell is less than the first threshold *a* or the value of the RSRP reported by the UE is less than the second threshold b.

Step 120: The network side counts special space CCE resources and the rest public space CCE resources of the cell, determines the value of CCE aggregation level L based on the type of DCIx of the UE to be allocated in the cell and the wideband CQI of the UE, uses the determined value of CCE aggregation level L to allocate the counted CCE resources to downlink of the DCIx of the UE in a descending order of downlink priority of the UE to be allocated in the cell, and maps the allocated CCE resources to the PDCCH.

The rest public space CCE resources are calculated using the up rounding algorithm.

The CCE resources obtained by the network side comprise the number of the CCEs and the position information corresponding to the CCEs.

When the network side determines the value of CCE aggregation level L, for DCI format 1, DCI format 1A, DCI format 1B and the DCI format 1D, values of CCE aggregation level L as shown in Table 1 are used; and for DCI format 2 and DCI format 2A, values of CCE aggregation level L as shown in Table 2 are used. (It should be noted that Table 1 and Table 2 are only examples, and any value of CCE aggregation level L determined based on the wideband CQI and the DCI should be within the protection scope of the prevent invention).

| Wideband CQI value | Available CCE aggregation level L |
|---|---|
| 1∼5 | 8 |
| 6∼10 | 4, 8 |
| 11∼14 | 2, 4, 8 |
| 15 | 1, 2, 4, 8 |

**Table 1**

| Wideband CQI value | Available CCE aggregation level L |
|---|---|
| 1∼6 | 8 |
| 7∼9 | 4, 8 |
| 11∼15 | 2, 4, 8 |

Step 130: The network side counts the rest special space CCE resources and the rest public space CCE resources of the cell, determines the value of CCE aggregation level L based on the wideband CQI of the UE to be allocated in the cell, uses the determined value of CCE aggregation level L to allocate the counted CCE resources to uplink grant of the UE in a descending order of downlink priority of the UE to be allocated in the cell, and maps the allocated CCE resources to the PDCCH.

The CCE resources obtained by the network side comprise the number of the CCEs and the position information corresponding to CCEs.

The network side determines the values of CCE aggregation level L according to Table 1.

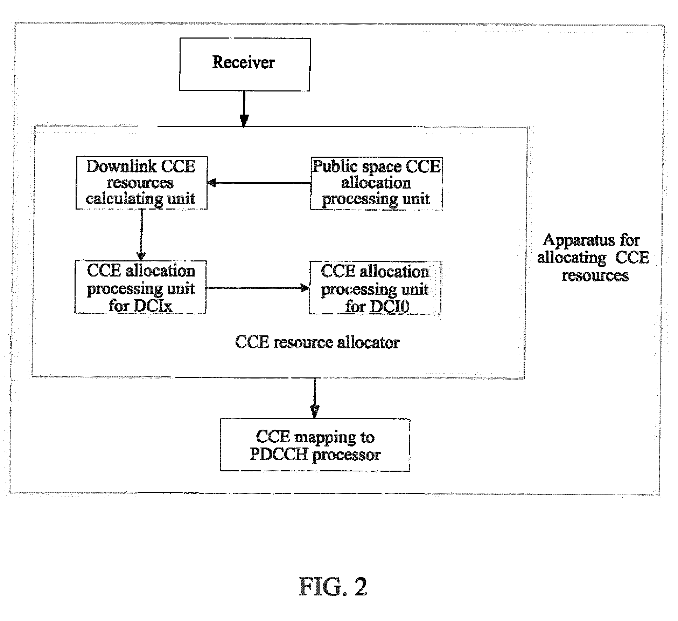

As shown in FIG. 2, there is provided an apparatus for allocating control channel element resources. The apparatus is located at a network side (e.g., eNB (evolved NodeB)) comprising the media access control (MAC) layer and the physical layer and comprises a receiver, a CCE resources allocator and a CCE mapping to PDCCH processor.

The receiver is configured to receive a wideband channel quality parameter and a signal received power parameter reported by a UE in a cell, and send the received wideband channel quality parameter and signal received power parameter to the CCE resources allocator.

The CCE resources allocator is configured to count the CCE resources of the cell, and allocate the counted CCE resources of the cell based on the received wideband channel quality parameter and signal received power parameter.

The CCE resources counted by the CCE resources allocator comprise the number of CCEs and position information corresponding to the CCEs.

The CCE resources allocator comprises a public space CCE allocation processing unit, a downlink CCE resources calculating unit, a CCE allocation processing unit for DCIx and a CCE allocation processing unit for DCIO.

The public space CCE allocation processing unit is configured to count public space CCE resources of the cell, and determine a value of CCE aggregation level L based on the received wideband channel quality parameter and signal received power parameter sent by the receiver, use the determined value of CCE aggregation level L to allocate the counted public space CCE resources to downlink control information (DCI) of the public space CCE resources to be located, and send the processed data to the downlink CCE resources calculating unit.

The public space CCE allocation processing unit acquires the DCI of the public space CCEs to be allocated in the current transport time interval (TTI) from a scheduler.

The public space CCE allocation processing unit determining the value of CCE aggregation level L based on the wideband channel quality parameter and the signal received power parameter sent by the receiver means that:
when a value of the wideband channel quality parameter reported by the UE activated in the cell is larger than or equals to a first threshold *a* or a value of signal received power parameter reported by the UE is larger than or equals to a second threshold *b*, the CCE allocation processing unit for DCIx determines the value of CCE aggregation level L to be 4; and
when the value of the wideband channel quality parameter reported by the UE activated in the cell is less than the first threshold *a* or the value of the signal received power parameter reported by the UE is less than the second threshold *b*, the CCE allocation processing unit for DCIx determines the value of CCE aggregation level L to be 8.

The downlink CCE resources allocation unit is configured to count special space CCE resources and the rest public space CCE resources of the cell based on the received processed data sent by the public space CCE allocation processing unit, and send the special space CCE resources and the rest public space CCE resources to the CCE allocation processing unit for DCIx.

The CCE allocation processing unit for DCIx is configured to determine the value of CCE aggregation level L based on the type of DCIx of the UE to be allocated in the cell and the wideband channel quality parameter of the UE, use the determined value of CCE aggregation level L to allocate the received CCE resources sent by the downlink CCE resources calculating unit to downlink of the DCIx of the UE in a descending order of downlink priority of the UE to be allocated in the cell, and send the processed data to the CCE allocation processing unit for DCIO.

The CCE allocation processing unit for DCIx acquires the DCIx used by each scheduled UE in the current transport time interval (TTI) from the scheduler.

The CCE allocation processing unit for DCIx determining the value of CCE aggregation level L means that for DCI format 1, DCI format 1A, DCI format 1B and the DCI format 1D, values of CCE aggregation level L as shown in Table 1 are used, and for DCI format 2 and DCI format 2A, values of CCE aggregation level L as shown in Table 2 are used.

The CCE allocation processing unit for DCIO is configured to count the rest special space CCE resources and the rest public space CCE resources of the cell based on the received processed data sent by the CCE allocation processing unit of the DCIx, determine the value of CCE aggregation level L based on the wideband channel quality parameter of the UE to be allocated in the cell, use the determined value of CCE aggregation level L to allocate the counted CCE resources to uplink grant of the UE in a descending order to uplink priority of the UE to be allocated in the cell.

The CCE allocation processing unit for DCIO acquires the DCIO used by each scheduled UE in the current transport time interval (TTI) from the scheduler, and determines the value of CCE aggregation level L according to Table 1.

The CCE mapping to PDCCH processor is configured to receive data of the allocated CCE resources of the cell sent by the CCE resources allocator and map the allocated CCE resources to the PDCCH based on the position information corresponding to the CCEs.

The present invention will be further described in conjunction with a particular embodiment.

In this embodiment, the cyclic prefix in a cell is configured as Normal, cell bandwidth is 20MHz, two transmitting antenna ports are used, the PDCCH occupies 3 OFDM symbols and the number of physical hybrid ARQ indicator channel (PHICH) groups is 3. There are five UEs, respectively UE0, UE1, UE2, UE3 and UE4, in the cell, and their cell-radio network temporary identifiers (C-RNTI) are 60, 82, 109, 110 and 178 respectively. In subframe 2, CCE resources will be allocated to one DCI 1C, DCI 0 and DCI 1 of the UE0, DCI 0 and DCI 2 of the UE1 as well as DCI 0 and DCI 1A of the UE2. At this point, wideband CQIs of the UE0, the UE1 and the UE2 are respectively 10, 7 and 3, and RSRPs reported by the UE2 and the UE4 are respectively 3 and 10. The method for an eNB to allocate CCE resources in accordance with the embodiment of the present invention comprises the following steps.

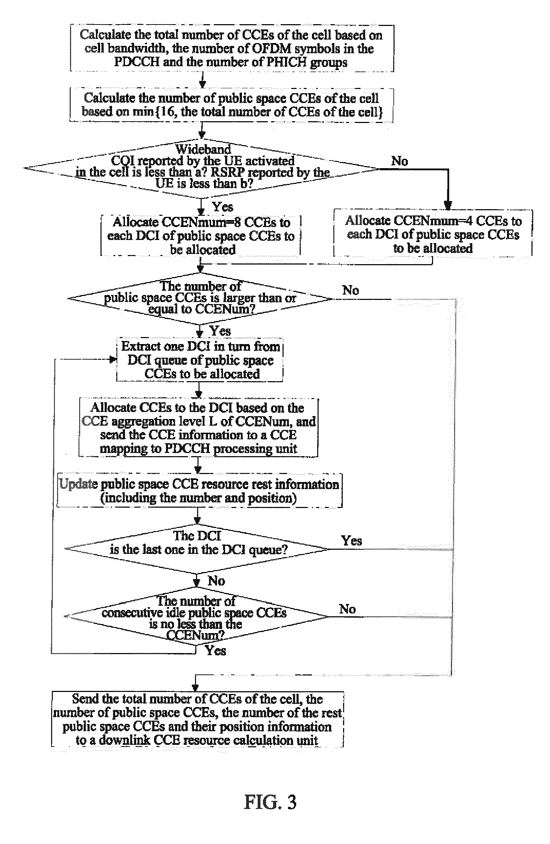

Step 300: As shown in FIG. 3, a public space CCE allocation processing unit calculates the total number of CCEs of the cell to be 87, and determines the number of public space CCEs of the cell to be 16, CCE0∼CCE15 respectively, based on the formula min{16, the total number of CCEs of the cell}. Because no wideband CQI of the UE in the cell is less than *a* or no RSRP reported by each UE is less than *b* (*a*=3 and *b*=3 in this example), for DCI of public space CCEs to be allocated, the value of CCE aggregation level L is determined to be 4. Four public space CCEs, CCE0∼CCE3 respectively, are allocated to the DCI 1C, and sent to the CCE mapping to PDCCH processing unit to map these four CCEs to the PDCCH and update public space CCE usage information. The public space CCE allocation processing unit also sends the total number 87 of the CCEs of the cell, the number 16 of the public space CCEs and the number 12 of the rest public space CCEs, as well as their position information (indicated by CCE4∼CCE15) to the downlink CCE resources calculating unit.

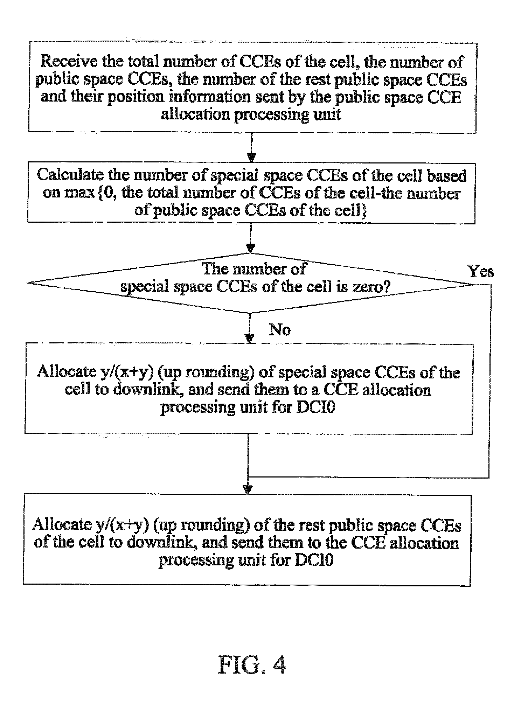

Step 400: As shown in FIG. 4, the downlink CCE resources calculating unit receives the total number 87 of the CCEs of the cell, the number 16 of the public space CCEs and the number 12 of the rest public space CCEs, as well as their position information (indicated by CCE4∼CCE15) sent from the public space CCE allocation processing unit, calculates the number of the special space CCEs to be 71 (indicated by CCE16∼CCE86 respectively) based on the formula max{0, the total number of CCEs of the cell - the number of public space CCEs}, calculates the number of the special space CCEs and the number of the rest public space CCEs (up rounding) allocated to downlink to be 48 and 8 respectively based on the ratio of *y*/(*x*+*y*) (x=1, y=2 in this embodiment), and sends the information to the CCE allocation processing unit for DCIx.

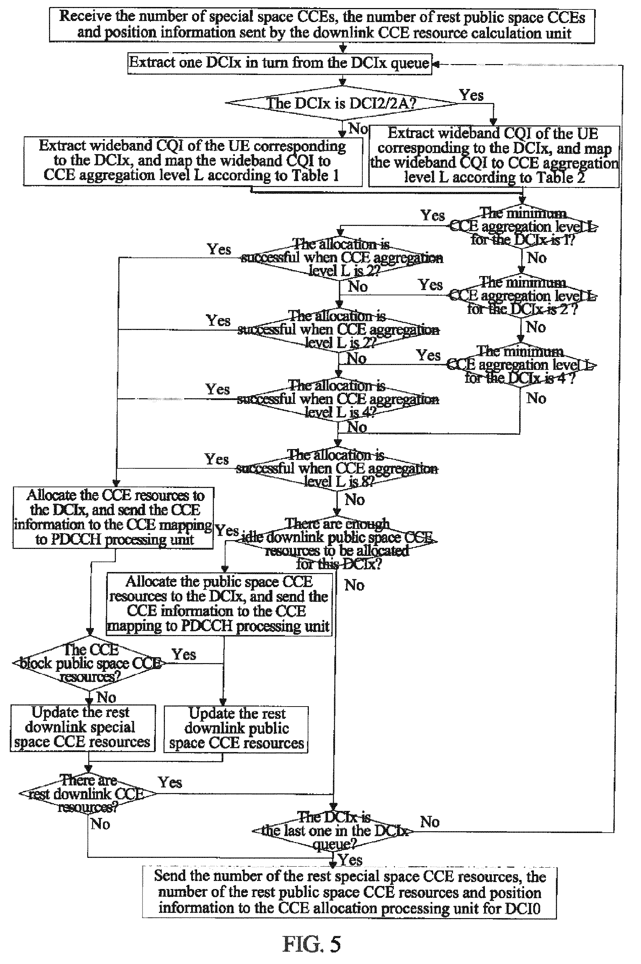

Step 500: As shown in FIG. 5, the CCE allocation processing unit for DCIx receives the number of the special space CCEs and the number of the rest public space CCEs as well as the position information sent by the downlink CCE resources calculating unit, and allocates the CCE resources to downlink DCI of each scheduled UE (the descending order of downlink priority of the UE is UE0, UE1 and UE2 in this example). The step 500 specially comprises the following steps.

500a: The DCI1 of the UE0 is first allocated. Since it is not DCI2/2A and the wideband CQI of the UE is 10, according to Table 1, the value of CCE aggregation level L may be determined to be 4 or 8 for the DCIx. The value of CCE aggregation level L is taken first as 4 for allocation. The CCEs calculated by the Hash function are CCE60∼CCE63 and not occupied, thus the CCE60∼CCE63 are allocated to the DCI1 of the UE0 and sent to the CCE mapping to PDCCH processing unit to map the CCEs to the PDCCH, and CCE usage information is updated.

500b: Secondly, the DCI2 of the UE1 is allocated. Since the wideband CQI of the UE is 7, according to Table 2, the value of CCE aggregation level L may be determined to be 4 or 8 for the DCIx. The value of CCE aggregation level L is taken first as 4 for allocation. The CCEs calculated by the Hash function are CCE20∼CCE23 and not occupied, thus the CCE4 and the CCE5 are allocated to the DCI2 of the UE1, the CCE20∼CCE23 are sent to the CCE mapping to PDCCH processing unit to map the CCEs to the PDCCH, and CCE usage information is updated.

500c: Then, the DCI1A of the UE2 is allocated. Since it is not DCI2/2A and the wideband CQI of the UE is 3, according to Table 1, the value of CCE aggregation level L may be determined to be 8 for the DCIx. The CCEs calculated by the Hash function are CCE8∼CCE15 and not occupied, thus the CCE8∼CCE15 are allocated to the DCI1A of the UE2 and sent to the CCE mapping to PDCCH processing unit to map the CCEs to the PDCCH, and CCE usage information is updated.

After determining that the allocation of the downlink DCIx is completed, the CCE allocation processing unit for DCIx sends the number of the rest special space CCE resources, the number of the rest public space CCE resources and their position information to the CCE allocation processing unit for DCIO. Specifically, the number of the rest special space CCEs is 63, CCE20∼CCE23 and CCE60∼CCE63 are occupied, the number of the rest public space CCEs is 4, and the CCE0∼CCE3 and the CCE8∼CCE15 are occupied.

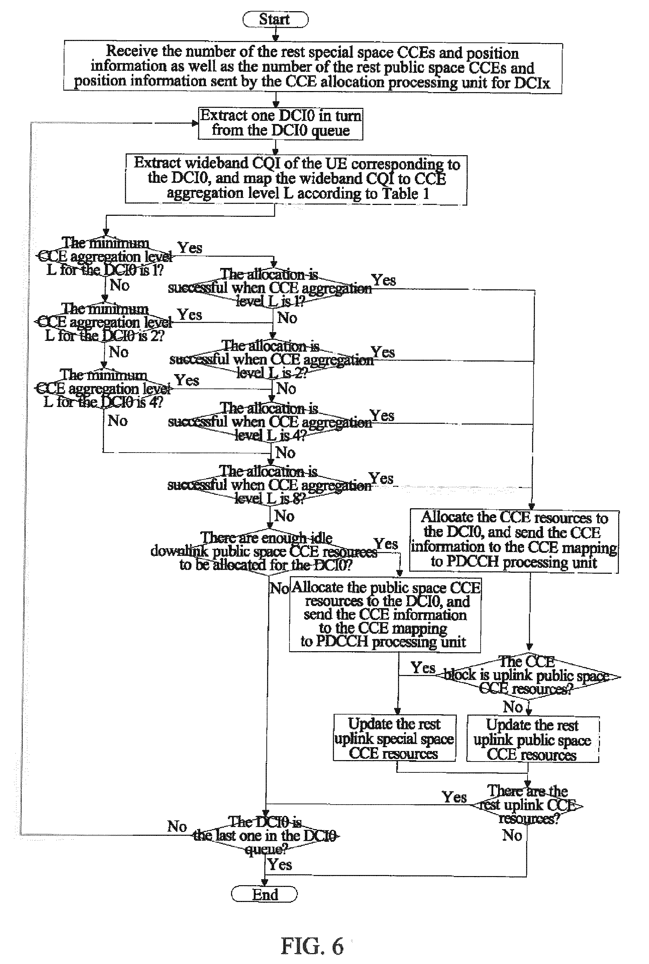

Step 600: As shown in FIG. 6, the CCE allocation processing unit for DCIO receives the number of the rest special space CCEs and the number of the rest public space CCEs as well as position information sent by the CCE allocation processing unit for DCIx, and allocates the CCE resources to downlink DCI of each scheduled UE (the descending order of downlink priority of the UE is UE1, UE2 and UE0 in this example). The step 500 specially comprises the following steps.

600a: The DCIO of the UE1 is first allocated. Since the wideband CQI of the UE is 7, according to Table 2, the value of CCE aggregation level L may be determined to be 4 or 8 for the DCIx. The value of CCE aggregation level L is taken first as 4 for allocation. The CCEs calculated by the Hash function are CCE20∼CCE23 and occupied, while CCE24∼CCE27 in the PDCCH candidates *M*⁽⁴⁾ are not occupied, thus the CCE24∼CCE27 are allocated to the DCIO of the UE1 and sent to the CCE mapping to PDCCH processing unit to map the CCEs to the PDCCH, and CCE usage information is updated.

600b: Secondly, the DCIO of the UE2 is allocated. Since the wideband CQI of the UE is 3, according to Table 1, the value of CCE aggregation level L may be determined to be 8 for DCIx. The CCEs calculated by the Hash function are CCE8∼CCE15 and occupied, while the CCE16∼CCE23 in the PDCCH candidates *M*⁽⁸⁾ are not occupied, thus the CCE16∼CCE23 are allocated to the DCIO of the UE2 and sent to the CCE mapping to PDCCH processing unit to map the CCEs to the PDCCH, and CCE usage information is updated.

600c: Then, the DCIO of the UE0 is allocated. Since the wideband CQI of the UE is 10, according to Table 1, the value of CCE aggregation level L may be determined to be 4 or 8 for DCIx. The value of CCE aggregation level L is taken first as 4 for allocation. The CCEs calculated by the Hash function are CCE60∼CCE63 and occupied, while the CCE64∼CCE67 in the PDCCH candidates *M*⁽⁴⁾ are not occupied, thus the CCE64∼CCE67 are allocated to the DCIO of the UE1 and sent to the CCE mapping to PDCCH processing unit to map the CCEs to the PDCCH, and CCE usage information is updated. Once it is determined that the allocation of each uplink DCIO is completed, the allocation of the CCEs in the subframe is completed.

The above description illustrates preferred embodiment of the present invention only, but the protection scope of the present invention is not limited thereto. Numerous variation or substitutions that may easily occur to those skilled in the art within the disclosed technical scope of the present invention should be covered in the protection scope of the present invention. Therefore, the protection scope of the present invention should be subject to the protection scope of the appended claims.

## Claims

1. A method for allocating control channel element (CCE) resources comprising the steps of:
a network side receiving a wideband channel quality parameter and a signal received power parameter reported by a user equipment (UE) in a cell; and
the network side allocating counted control channel element resources of the cell based on the received wideband channel quality parameter and signal received power parameter.

2. The method according to claim 1, wherein the steps of the network side allocating the counted CCE resources of the cell based on the received wideband channel quality parameter and signal received power parameter further comprises:
the network side counting public space CCE resources of the cell, determining a value of CCE aggregation level L based on the wideband channel quality parameter and the signal received power parameter reported by the UE in the cell, and using the determined value of CCE aggregation level L to allocate the counted public space CCE resources to downlink control information (DCI) of public space CCE resources to be allocated;
the network side counting special space CCE resources of the cell and the rest public space CCE resources of the cell, determining the value of CCE aggregation level L based on the type of DCIx of the UE to be allocated in the cell and the wideband channel quality parameter of the UE, and using the determined value of CCE aggregation level L to allocate the counted CCE resources to downlink of the DCIx of the UE in a descending order of downlink priority of the UE to be allocated in the cell; and
the network side counting the rest special space CCE resources and the rest public space CCE resources of the cell, determining the value of CCE aggregation level L based on the wideband channel quality parameter of the UE to be allocated in the cell, and using the determined value of CCE aggregation level L to allocate the counted CCE resources to uplink grant of the UE in a descending order of uplink priority of the UE to be allocated in the cell.

3. The method according to claim 2, wherein the network side determining the value of CCE aggregation level L based on the wideband channel quality parameter and the signal received power parameter reported by the UE in the cell comprises:
when the network side determines that a value of the wideband channel quality parameter reported by the UE activated in the cell is larger than or equals to a first threshold or a value of the signal received power parameter reported by the UE is larger than or equals to a second threshold, the network side determining the value of CCE aggregation level L to be 4; and
when the network side determines that the value of the wideband channel quality parameter reported by the UE activated in the cell is less than the first threshold or the value of the signal received power parameter reported by the UE is less than the second threshold, the network side determining the value of CCE aggregation level L to be 8.

4. The method according to claim 1, wherein the CCE resources counted by the network side comprise the number of CCEs and position information corresponding to the CCEs;
after the network side allocates the counted CCE resources of the cell, the method further comprises: the network side mapping the allocated CCE resources to physical downlink control channel (PDCCH) based on the position information corresponding to the CCEs.

5. The method according to claim 1, wherein the wideband channel quality parameter reported by the UE is wideband channel quality indicator (CQI); and the signal received power parameter reported by the UE is reference signal received power (RSRP) of the cell to which the UE belongs.

6. An apparatus for allocating control channel element (CCE) resources which is located in a network side and comprises a receiver and a control channel element resources allocator, wherein
the receiver is configured to receive a wideband channel quality parameter and a signal received power parameter reported by the UE in the cell, and send the received wideband channel quality parameter and signal received power parameter to the CCE resources allocator; and
the CCE resources allocator is configured to count CCE resources of the cell, and allocate the counted CCE resources of the cell based on the received wideband channel quality parameter and signal received power parameter sent by the receiver.

7. The apparatus according to claim 6, wherein the CCE resources allocator comprises a public space CCE allocation processing unit, a downlink CCE resources calculating unit, a CCE allocation processing unit for DCIx and a CCE allocation processing unit for DCIO, wherein
the public space CCE allocation processing unit is configured to count public space CCE resources of the cell, determine a value of CCE aggregation level L based on the received wideband channel quality parameter and signal received power parameter sent by the receiver, use the determined value of CCE aggregation level L to allocate the public space CCE resources to downlink control information (DCI) of the public space CCE resources to be allocated, and send processed data to the downlink CCE resources calculating unit;
the downlink CCE resources allocation unit is configured to count special space CCE resources and the rest public space CCE resources of the cell based on the received processed data sent by the public space CCE allocation processing unit, and send the special space CCE resources and the rest public space CCE resources to the CCE allocation processing unit for DCIx;
the CCE allocation processing unit for DCIx is configured to determine the value of CCE aggregation level L based on the type of DCIx of the UE to be allocated in the cell and the wideband channel quality parameter of the UE, use the determined value of CCE aggregation level L to allocate the received CCE resources sent by the downlink CCE resources calculating unit to downlink of the DCIx of the UE in a descending order of downlink priority of the UE to be allocated in the cell, and sends processed data to the CCE allocation processing unit for DCI0; and
the CCE allocation processing unit for DCIO is configured to count the rest special space CCE resources and the rest public space CCE resources of the cell based on the received processed data sent by the CCE allocation processing unit for DCIx, determine the value of CCE aggregation level L based on the wideband channel quality parameter of the UE to be allocated in the cell, use the determined value of CCE aggregation level L to allocate the counted CCE resources to uplink grant of the UE in a descending order of uplink priority of the UE to be allocated in the cell.

8. The apparatus according to claim 7, wherein the public space CCE allocation processing unit determining the value of CCE aggregation level L based on the wideband channel quality parameter and the signal received power parameter sent by the receiver means that:
when the CCE allocation processing unit for DCIx determines that a value of the wideband channel quality parameter reported by the UE activated in the cell is larger than or equals to a first threshold or a value of the signal received power parameter reported by the UE is larger than or equals to a second threshold, the CCE allocation processing unit for DCIx determines the value of CCE aggregation level L to be 4; and
when the CCE allocation processing unit for DCIx determines that the value of the wideband channel quality parameter reported by the UE activated in the cell is less than the first threshold or the value of the signal received power parameter reported by the UE is less than the second threshold, the CCE allocation processing unit for DCIx determines the value of CCE aggregation level L to be 8.

9. The apparatus according to claim 6, wherein the CCE resources of the cell counted by the CCE resources allocator comprise the number of CCEs and position information corresponding to the CCEs; and
the apparatus further comprises a CCE mapping to physical downlink control channel (PDCCH) processor configured to receive data of the allocated CCE resources of the cell sent by the CCE resources allocator and map the allocated CCE resources to the PDCCH based on the position information corresponding to the CCEs.

10. The apparatus according to claim 6, wherein the wideband channel quality parameter reported by the UE is wideband channel quality indicator (CQI); and the signal received power parameter reported by the UE is reference signal received power (RSRP) of the cell to which the UE belongs.
